Europäisches Patentamt

European Patent Office

Office européen des brevets

(11) Publication number: **0 067 198**
**B1**

(12) **EUROPEAN PATENT SPECIFICATION**

(45) Date of publication of patent specification: **08.05.85**

(21) Application number: **82900191.6**

(22) Date of filing: **23.12.81**

(86) International application number:
**PCT/GB81/00284**

(87) International publication number:
**WO 82/02234 08.07.82 Gazette 82/17**

(51) Int. Cl.⁴: **F 16 J 10/02**

(54) Cylinder with sliding piston.

(30) Priority: **23.12.80 FR 8027830**

(43) Date of publication of application:
**22.12.82 Bulletin 82/51**

(45) Publication of the grant of the patent:
**08.05.85 Bulletin 85/19**

(84) Designated Contracting States:
**AT DE GB SE**

(56) References cited:
**FR-A-1 001 088**
**FR-A-2 146 811**
**GB-A- 529 885**
**US-A-2 284 645**

(73) Proprietor: **AE PLC**
**Cawston House Cawston Rugby**
**Warwickshire, CV22 7SA (GB)**

(72) Inventor: **COJON, Roger**
**3 Rue Eugene Verdun**
**F-74000 Annecy (FR)**

(74) Representative: **Rees, David Christopher et al**
**Kilburn & Strode 30 John Street**
**London WC1N 2DD (GB)**

Courier Press, Leamington Spa, England.

## Description

The present invention relates to a lubricated cylinder having a bearing at one end and a piston mounted on a shaft, the piston being slidably located within the cylinder and the shaft being slidably located in the bearing.

In conventional sliding mechanical joints which move e.g. in reciprocation substantially in a straight line, the axes of the bearings or the bearing surfaces are generally parallel with the axis of motion. Conventional joints are efficient when the resultant of the received or transmitted forces is substantially parallel to the direction of relative motion.

This situation however is extremely rare in practice. As a rule, either occasionally or permanently, the joint has to withstand considerable forces having a component perpendicular to the direction of motion. The results may be increased wear on the parts in contact resulting in gaps and lower geometrical accuracy of relative motion, and a coefficient of friction which results in an oppositing force which wastes power.

There is also a serious risk of seizure under heavy lateral loads.

It is an object of the present invention to obviate these disadvantages or at least delay or reduce the aforementioned harmful effects (i.e. opposing force, wear, power consumption and seizure) in the case where operation occurs in the presence of oil or, more generally, in the presence of a fluid.

FR—A—1001088 and US—A—2284645 both show compressors having a piston reciprocating within a cylinder, driven by an offset rotating shaft. This results in the piston shaft being subjected to lateral forces as well as axial forces. However, in each case the stroke of the piston is small compared to the cylinder bore and so the piston is allowed to rock as it travels along its stroke. In both cases, the piston shaft is not supported by a bearing.

In the case of FR—A—1001088, the piston surface is slightly convex whereas in the case of US—A—2284645 the piston surface is made up of resilient pads, thus in each case the rocking of the piston can be accommodated.

According to the invention the cylinder and piston arrangement is characterised in that the bearing has a surface which is convex in the axial direction and in that the bearing is offset from the axis of the cylinder in a direction opposite to that of the lateral force, whereby when the piston slides in the cylinder a rotation or tilting is imposed on the shaft and piston, about an axis substantially perpendicular to the direction of the main motion of the shaft and piston and to the direction of the lateral force.

Preferably, the surface of the piston is convex in the axial direction. As a result of the secondary rotation, the various surfaces may be in contact at points or lines which vary during motion, so local wear can be avoided. Furthermore, if these surfaces are not flattened but curved, they may have a shape which facilitates the formation of an "oil wedge" during motion. This produces a hydrodynamic force which can separate the two surfaces and prevent permanent direct contact between them.

In a preferred mode of operation, the secondary rotation is such that, during the motion, it acts so as to "close" the oil wedge in the immediate vicinity of the two surfaces in contact.

This method may result in the following advantages:—

1. Improved efficiency of the materials in contact, avoiding seizure;
2. Distribution of wear over a larger area;
3. Reduction of energy consumption;
4. Positive lift during reversal of direction of motion; and
5. Lower opposing force during reversals, thus reducing the associated "impact".

The amplitude of rotation during the entire reciprocating travel is small, usually between 5 and $150 \times 10^{-4}$ radian (0.5 and 15 thousandth of a radian).

Thus, since the moving parts preferably bear on a counteracting part by means of at least one bearing surface whose profile is a curved convex surface in the longitudinal direction (parallel to the motion in a straight line), the point (or line) of contact moves with the moving part. The curved surfaces can be present from the beginning or can be produced during initial use of the joint (running-in).

The curved surface could have any shape (actually the envelope of the positions of the outer surface of one of the moving parts of the other), however, for practical reasons, it is usually an arc of an ellipse or circle having a large radius or radii or curvature.

The secondary rotation is brought about simply by moving the bearing out of centre by a certain amount relative to the axial geometrical position. The out-of-centre position is preferably in the plane defined by the direction of lateral forces and the main axis of motion along a straight line.

Preferably therefore the shaft is displaced to the side of the axis opposite to the point of contact between the shaft and the bearing, and may result from the lateral forces acting on the moving part.

The invention may be carried into practice in various ways and some embodiments will now be described by way of example with reference to the accompanying drawings, in which:—

Figure 1 is a diagrammatic representation of the relative motion of two components to illustrate the principle of the invention;

Figure 2 is a partial longitudinal section through a jack or actuator in accordance with the invention; for clarity in the drawing, the eccentricity and clearances have been greatly exaggerated;

Figures 3 and 4 show diagrammatically the theoretical lines of contact between the piston and cylinder of Figure 2 during motion; and

Figure 4 is a section through a test device.

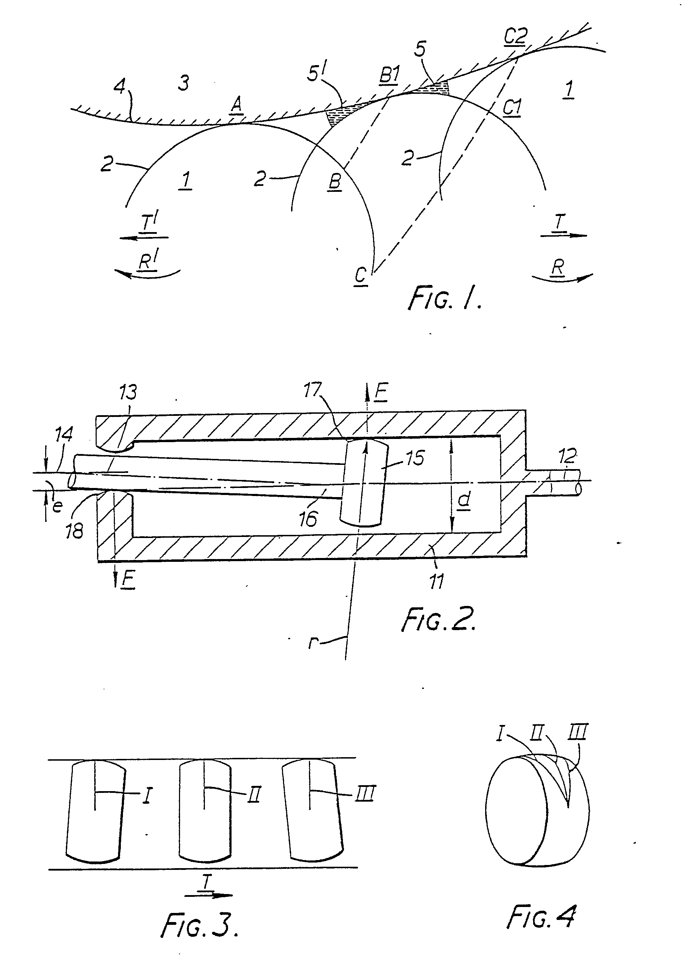

In Figure 1, a moving member 1 bounded by its convex outer surface 2 moves in a main rectilinear direction T relative to a stationary member 3 having an outer surface 4. During the rectilinear motion T, member 1 also undergoes rotation R. During the motion, points A, B, C on surface 2 of the moving member 1 move respectively and in succession to points A, $B_1$, $C_2$, spaced apart on the outer surface 4 in the direction of motion T. Consequently, an oil wedge, diagrammatically shown at 5 forms between the two members 1 and 2, and this oil wedge 5 tends to close during the motion.

If the main motion occurs in the opposite direction T' a similar oil wedge 5' tends to form and to close as a result of secondary rotation R' in the reverse direction. Thus, the effect is observed if rotation R or R' occurs in either direction.

Figure 2 shows a jack or shock-absorber device. It comprises a cylinder 11 having an axis 12 and a bearing 13 whose axis 14 is out of centre by an amount $e$ relative to the axis of the cylinder 12. The device also comprises a piston 15 in the cylinder 11, the piston 15 being centred on a shaft 16 borne by the bearing 13. When the shaft 16 is subjected to lateral bending, the piston 15 bears against the cylinder surface 17 to one side of the axis 12 and the shaft 16 bears against the surface 18 of the bearing 13 to the opposite side of the axis 12.

The eccentricity $e$ is in the plane defined by the theoretical point of contact between the piston and cylinder and the cylinder axis 12, and is preferably displaced from the axis 12 in a direction away from the surface 18 where the shaft 16 bears on the bearing 13.

The outer surface 17 of the piston 15 is, in the longitudinal direction, an arc of a circle having a radius $r$ which is usually much greater than the diameter $d$ of the cylinder 11. By way of example, in a cylinder 40 mm in diameter with a piston stroke $I = \pm 90$ mm relative to the central position and an eccentricity $e$ of 0.25 mm, $r$ can vary from 5 to 20 m.

If the piston 15 is out of centre by a distance $e'$ which is in the same direction from the axis 12 as $e$, then the situation will be quite acceptable provided $e \neq e'$.

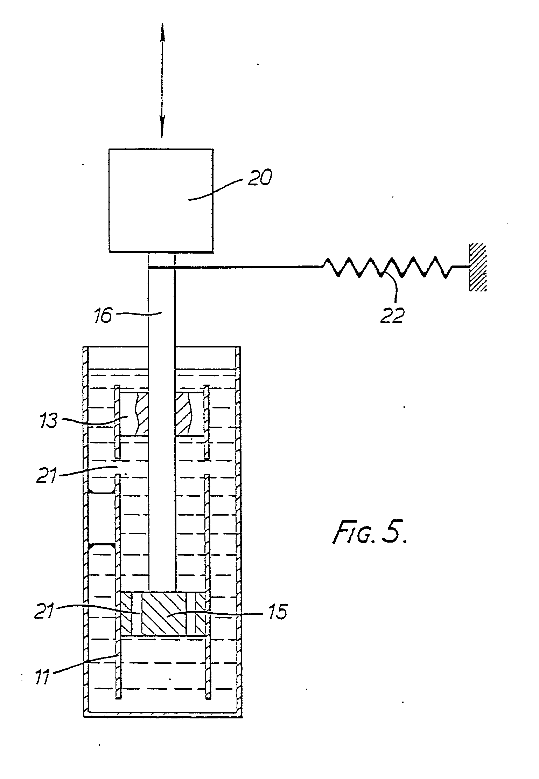

As shown in Figures 3 and 4, the theoretical curve of contact between the piston and cylinder moves during the motion T through positions I, II and III. It is thus possible to bring about and maintain hydrodynamic conditions and thus reduce wear. Similar conditions occur at the bearing 13.

### Example

Tests were carried out on a device as shown in Figure 5. The device comprised a piston 15, 40 mm in diameter and 18 mm thick in a cylinder 11 filled with oil which was free to move through apertures 21 formed in the cylinder wall and in the piston 15.

The piston-rod 16 was 20 mm in diameter and was connected to a crank-connection rod system via a force pick-up 20. The piston was driven by this system in reciprocating motion having a period of one second and an amplitude of $\pm 60$ mm. The rod 16 extended through an 18 mm thick guide 13. A transverse force of 500 N was applied by a calibrated spring 22, at a distance of 300 mm from the central axis of the piston 15.

The distance of the guide from the piston in its central position was 150 mm.

When the guide and piston were centred and had cylindrical bearing surfaces, the average coefficient of friction during the cycle was found to be 5% and the instantaneous coefficient during reversal was 8%.

In a device according to the invention made of the same materials, except that the guide was 0.2 mm out of centre and the guide and piston had a convexity of $r = 12$ m, the coefficients of friction were found to be reduced to 3 and 4% respectively.

### Claims

1. A device comprising a lubricated cylinder (11) having a bearing (13) at one end and a piston (15) mounted on a shaft (16), the piston (15) being slidably located within the cylinder (11) and the shaft (16) being slidably located in the bearing (13), the shaft (16) also being subjected to a lateral force ($F$), characterised in that the bearing (13) has a surface (18) which is convex in the axial direction and in that the bearing (13) is offset from the axis (12) of the cylinder (11) in a direction opposite to that of the lateral force ($F$), whereby when the piston (15) slides in the cylinder (11) a rotation or tilting is imposed on the shaft (16) and piston (15), about an axis substantially perpendicular to the direction of the main motion of the shaft and piston and to the direction of the lateral force ($F$).

2. A method as claimed in Claim 1 characterised in that during one reciprocal cycle, the rotation is through between 5 and $150 \times 10^{-4}$ radian.

3. A device as claimed in Claim 1 or Claim 2 characterised in that the bearing surface (18) acquires a convex shape during the running-in of the device.

4. A device as claimed in any preceding claim characterised in that the surface of the piston (15) is convex in the axial direction.

### Revendications

1. Dispositif comprenant un cylindre lubrifié (11) comportant un palier (13) à une extrémité et un piston (15) monté sur une tige (16), le piston (15) coulissant dans le cylindre (11) et la tige (16) coulissant dans le palier (13), la tige (16) étant aussi soumise à une force latérale ($F$), caractérisé en ce que le palier (13) présente une surface (18) qui est convexe dans le sens axial et ce palier (13) est décalé de l'axe (12) du cylindre (11) dans un sens opposé à celui de la force latérale ($F$), de sorte que, lorsque le piston (15) coulisse dans le cylindre (11), un mouvement de pivotement ou d'inclinaison est imposé à la tige (16) et au piston (15), autour d'un axe en substance perpendiculaire à la direction du mouvement principal de la tige et du piston et à la direction de la force latérale ($F$).

2. Procédé suivant la revendication 1, caractérisé en ce que, pendant un cycle de mouvement de va-et-vient, l'amplitude du pivotement est comprise entre 5 et 150 × 10⁻⁴ radians.

3. Dispositif suivant la revendication 1 ou 2, caractérisé en ce que, la surface (18) du palier acquiert une forme convexe pendant le rodage du dispositif.

4. Dispositif suivant l'une quelconque des revendications précédentes, caractérisé en ce que la surface du piston (15) est convexe dans le sens axial.

**Patentansprüche**

1. Anordnung mit einem geschmierten Zylinder (11), mit einem Lager (13) am einen Ende und einem auf einer Stange (16) befestigten Kolben (15), wobei der Kolben (15) gleitbar im Zylinder (11) angeordnet ist, die Stange (16) gleitbar im Lager (13) gehalten ist und die Stange (16) auch einer Seitenkraft (F) ausgesetzt ist, dadurch gekennzeichnet, daß das Lager (13) eine Oberfläche (18) aufweist, welche in Axialrichtung konvex ist, und daß das Lager (13) aus der Achse (12) des Zylinders (11) in einer Richtung entgegen der Richtung der Seitenkraft (F) versetzt ist, wodurch beim Gleiten des Kolbens (15) im Zylinder (11) die Stange (16) und der Kolben (15) einem Verdrehen oder Kippen um eine Achse ausgesetzt werden, die im wesentlichen vertikal zur Richtung der Hauptbewegung von Stange und Kolben und zur Richtung der Seitenkraft (F) ist.

2. Verfahren nach Anspruch 1, dadurch gekennzeichnet, daß im Verlauf einer Hin- und Herbewegung die Verdrehung durch einen Bogen zwischen 5 und 150 × 10⁻⁴ Radiant erfolgt.

3. Anordnung nach Anspruch 1 oder 2, dadurch gekennzeichnet, daß die Lageroberfläche (18) eine konvexe Form während des Einlaufens der Anordnung erhält.

4. Anordnung nach einem der vorhergehenden Ansprüche, dadurch gekennzeichnet, daß die Oberfläche des Kolbens (15) in Axialrichtung konvex ist.

FIG. 1.

FIG. 2.

FIG. 3.

FIG. 4

FIG. 5.